# FASCICULE DE BREVET EUROPEEN

(11) **EP 0 908 992 B1**
(45) Date de publication et mention de la délivrance du brevet: **16.04.2003**
(21) Numéro de dépôt: 98402262.4
(22) Date de dépôt: 14.09.1998
(51) Int. Cl.: H02G 3/06

(54) **Dispositif de recouvrement variable pour conduit de câblage électrique**
Vorrichtung zur variablen Abdeckung von elektrischen kabelführungen
Variable cover device for electrical cabling duct

(30) Priorité: 16.09.1997 FR 9711490
(43) Date de publication de la demande: 14.04.1999
(73) Titulaire: PLANET-WATTOHM, 60300 Senlis (FR)
(72) Inventeur: Albert, Christophe, 60700 Pont Sainte Maxence (FR); Coutant, Régis, 60117 Vauciennes (FR); Marcou, Jean Claude, 87000 Limoges (FR); Hery, Olivier, 60680 Grand Fresnoy (FR)
(74) Mandataire: CABINET BONNET-THIRION

(56) Documents cités:
- EP-A- 0 734 107
- DE-U- 29 611 092
- GB-A- 2 031 661

## Description

L'invention se rapporte à un dispositif de recouvrement variable pour conduit de câblage électrique, notamment du type à "angle variable" pour recouvrir deux extrémités voisines de tronçons de goulotte et assurer ainsi la continuité du conduit de câblage aux emplacements où celui-ci change de direction. Un dispositif de recouvrement à angle variable conforme à l'invention peut notamment constituer un accessoire connu sous le nom de "angle intérieur", ou "angle extérieur" lorsque le changement de direction du conduit s'opère dans des plans différents, ou encore "angle plat" lorsque le changement de direction s'opère dans un même plan, à la surface d'une paroi.

Dans les installations électriques faisant appel à des conduits de câblage utilisant des profilés en matière plastique, il est connu de fixer au mur un premier profilé ou goulotte, à section en forme de U et de recouvrir ce profilé par un autre profilé formant couvercle venant s'emboîter sur le profilé en U. Des accessoires doivent être prévus pour recouvrir les parties d'extrémité de tronçons successifs. Ces accessoires doivent pouvoir être adaptés à différentes configurations, notamment le passage d'un mur à un autre ou le contournement d'un obstacle ou encore un changement de direction sur une paroi. En général, deux tronçons de goulotte à raccorder ne sont pas rigoureusement dans le prolongement l'un de l'autre ou perpendiculaires l'un à l'autre. C'est pourquoi, il est souhaitable que le dispositif de recouvrement qui vient coiffer les extrémités de ces tronçons de goulotte, puisse être déformé sans contrainte excessive pour pouvoir être monté par emboîtement et recouvrir relativement hermétiquement les extrémités adjacentes des tronçons de goulotte.

Pour ce faire, on connaît un accessoire présentant deux tronçons en matériau semi-rigide rattachés l'un à l'autre par un moyen formant charnière et présentant deux surfaces cylindriques respectives, en recouvrement variable. Les deux surfaces cylindriques admettent l'axe de la charnière en tant qu'axe de rotation, ce qui permet l'ajustement angulaire entre les deux tronçons. Ce système est d'un prix de revient élevé et les surfaces en chevauchement doivent être, dans certains cas, découpées intérieurement pour ne pas obstruer le canal de câblage.

Un autre système connu comporte aussi une charnière reliant les deux tronçons et les sections de ces derniers sont de dimensions différentes pour que l'un des tronçons puisse s'engager partiellement à l'intérieur de l'autre, par rotation autour de ladite charnière.

Les documents DE 296 11 092 et GB 2 031 661 décrivent des systèmes comprenant des caractéristiques énoncées ci-dessus.

Outre leurs prix de revient élevés, ces dispositifs sont relativement inesthétiques. L'invention permet de résoudre ces problèmes.

Plus particulièrement, l'invention concerne un dispositif de recouvrement variable pour conduit de câblage électrique, comprenant deux tronçons en matériau semi-rigide rattachés l'un à l'autre suivant un agencement formant charnière, dans lequel au moins une échancrure d'ouverture ajustable est ménagée entre lesdits tronçons au voisinage de ladite charnière, caractérisé en ce que cette échancrure est comblée ou recouverte par un élément d'obturation rapporté agencé pour permettre un ajustement angulaire entre les deux tronçons, au moyen de ladite charnière.

Plusieurs modes de réalisation correspondant à la définition qui précède, sont possibles.

Ainsi, ledit élément d'obturation peut comporter un élément en matériau déformable fixé latéralement aux bords de ladite échancrure. La déformation de cet élément permet l'ajustement angulaire entre les deux tronçons.

En variante, l'élément d'obturation peut former une double glissière où s'engagent avec jeu les bords de ladite échancrure. Bien que l'élément de recouvrement soit dans ce cas, relativement rigide, le jeu permet l'ajustement angulaire entre les deux tronçons, l'élément étant monté "flottant" entre ceux-ci.

Dans le cas le plus fréquent où le dispositif de recouvrement est constitué de deux tronçons à profil globalement en forme de U, celui-ci comporte donc deux ailes latérales précitées parallèles. Dans ce cas, chaque aile comporte une échancrure au voisinage de la charnière et chaque échancrure est comblée ou recouverte par un élément d'obturation précité.

Le dispositif peut être moulé ouvert, fermé ou à 90°. Ce dernier cas est préférable car il correspond à la configuration la plus fréquente lors d'une installation et permet de réduire les contraintes lorsqu'une partie souple déformable est associée à la partie rigide. Le dispositif peut alors comporter une bande présentant un coude et au moins une aile latérale s'étendant perpendiculairement à ladite bande. L'échancrure se situe sur l'aile latérale au voisinage du coude et ce dernier est flexible et constitue ladite charnière. Par exemple, cette échancrure peut s'étendre entre deux tronçons faisant entre eux un angle voisin de 90° et ses bords peuvent converger vers ladite charnière.

Ledit élément d'obturation comporte alors deux bords faisant entre eux un angle correspondant à celui que forment les bords de ladite échancrure et auxquels ils sont fixés. L'élément d'obturation comporte par ailleurs deux autres bords approximativement respectivement situés dans les prolongements des bords libres de ladite aile latérale, de part et d'autre dudit coude.

L'invention sera mieux comprise et d'autres avantages de celle-ci apparaîtront plus clairement à la lumière de la description qui va suivre de plusieurs dispositifs de recouvrement conformes à son principe, donnée uniquement à titre d'exemple et faite en référence aux dessins annexés dans lesquels:
- la figure 1 est une vue générale en perspective d'un dispositif de recouvrement dit "angle intérieur", conforme à l'invention;
- la figure 2 est une vue en perspective de la partie en matériau semi-rigide du dispositif de la figure 1;
- la figure 3 est une vue en perspective de la partie en matériau souple et déformable du dispositif de la figure 1, vue selon la flèche III de la figure 1;
- la figure 4 est une coupe partielle IV-IV de la figure 1, à plus grande échelle;
- la figure 5 est une vue de dessus de la figure 1;
- la figure 6 est une vue en perspective d'un second mode de réalisation d'un dispositif de recouvrement dit "angle extérieur" conforme à l'invention;
- la figure 7 est une vue en perspective d'un troisième mode de réalisation d'un dispositif de recouvrement conforme à l'invention;
- la figure 8 est une vue en perspective du même dispositif, sans l'élément d'obturation; et
- la figure 9 est une section d'un conduit de câblage électrique avec lequel un dispositif de recouvrement selon l'invention peut être utilisé.

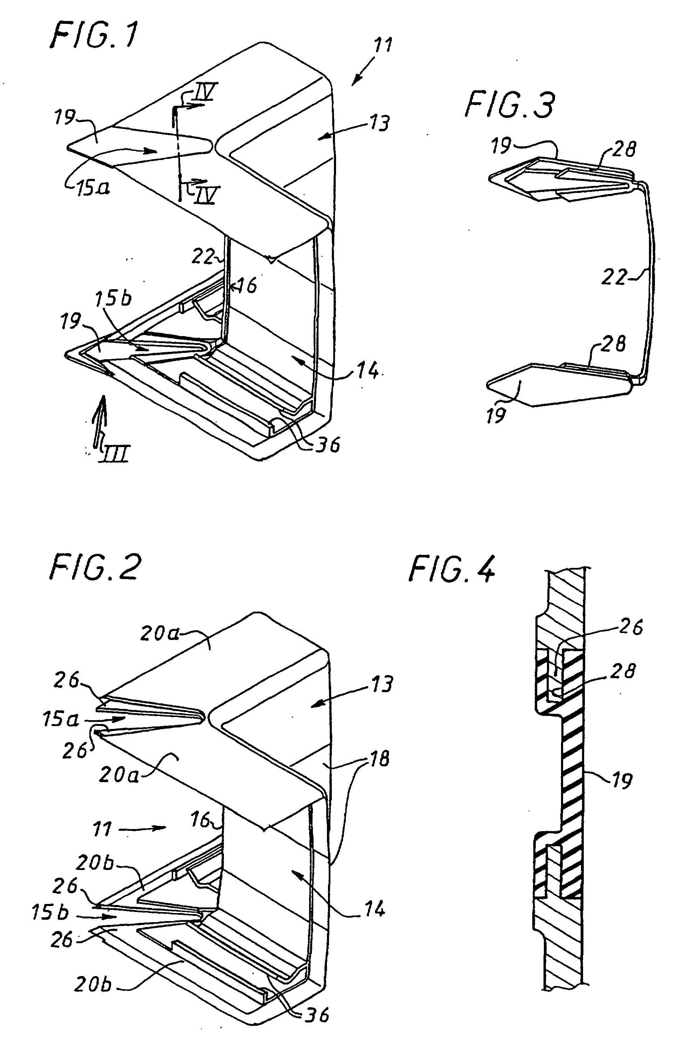

Sur les figures 1 à 5, on a représenté un dispositif de recouvrement variable 11 dit "angle intérieur" comprenant deux tronçons 13, 14 en matériau semi-rigide (matière plastique moulée) à profil globalement en forme de U, rattachés l'un à l'autre suivant un agencement formant charnière 16 et deux échancrures 15a, 15b d'ouverture ajustable ménagées entre ces deux tronçons au voisinage de ladite charnière 16. Chaque échancrure est comblée par un élément d'obturation 19 en matériau déformable et souple (élastomère par exemple) pour permettre un ajustement angulaire entre les deux tronçons 13, 14, au moyen de ladite charnière. L'élément d'obturation 19 est rapporté (étant ici d'un matériau différent) bien que fixé aux bords de l'échancrure. Plus précisément ici, comme le montre la figure 2, les tronçons 13, 14 en matériau semi-rigide forment une seule pièce moulée comportant une bande 18 (correspondant à la base du U) qui présente un coude d'environ 90° et deux ailes latérales parallèles 20a, 20b (correspondant aux branches parallèles du U) s'étendant sensiblement perpendiculairement à la bande 18. Chaque échancrure 15a, 15b se situe sur l'aile latérale 20a, 20b correspondante, au voisinage du coude rendant celui-ci plus particulièrement flexible de sorte qu'il constitue la charnière 16 précitée. Chaque échancrure est ainsi définie sensiblement perpendiculairement au coude définissant la charnière 16.

Selon l'exemple représenté, les deux éléments d'obturation sont rattachés entre eux par un lien 22 s'étendant le long de la charnière. Lesdits éléments d'obturation 19 et le lien 22 forment une seule pièce moulée en matériau déformable souple, visible sur la figure 3. Le lien 22 facilite la mise en place et le maintien des deux éléments d'obturation. Il peut être collé ou autrement fixé le long du coude formant la charnière 16.

Dans l'exemple, les bords de chaque échancrure sont conformés pour présenter des nervures amincies 26 tandis que l'élément d'obturation 19 comporte des fentes latérales 28 (figure 3) dans lesquelles s'engagent lesdites nervures (figure 4). L'assemblage peut être renforcé par collage ou soudure. En particulier, chaque élément d'obturation ou la pièce moulée représentée sur la figure 3 peut être solidarisé aux deux tronçons ou à la partie rigide par injection bi-matière. Ce type d'assemblage permet d'obtenir une configuration particulièrement esthétique dans laquelle la face extérieure de chaque élément d'obturation 19 se situe dans le même plan que la face extérieure de l'aile latérale 20a ou 20b à laquelle elle est rattachée (figure 1).

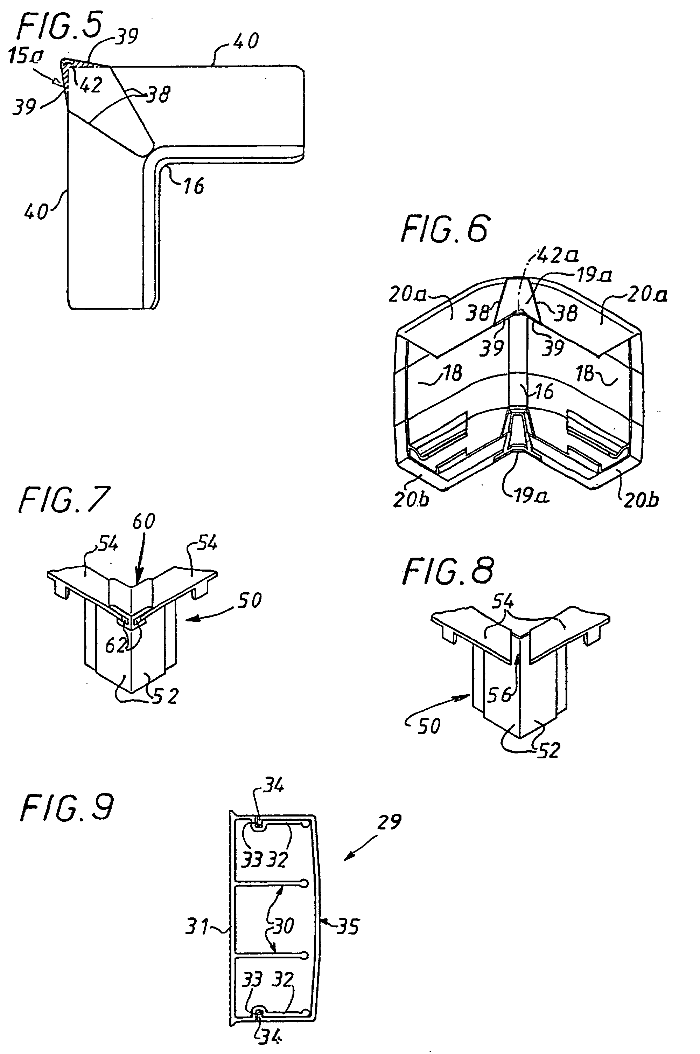

La figure 9 est une section d'un conduit 29 pour câble électrique, de type classique, composé de deux profilés 30, 35 l'un sur l'autre. Le premier profilé 30 ou goulotte est destiné à être fixé à une paroi par sa base 31. Celle-ci est bordée par deux ailes longitudinales 32 sensiblement perpendiculaires à la base et comportant chacune une rainure longitudinale 33 destinée à recevoir les bords longitudinaux recourbés 34 du second profilé 35 formant couvercle.

A une extrémité de la paroi sur laquelle il est monté, le profilé formant goulotte 30 est sectionné à la demande pour se raccorder à un autre du même type fixé à la paroi adjacente. On procède de même pour le profilé formant couvercle. C'est à ces raccordements d'angle que l'on utilise un dispositif de recouvrement selon l'invention, pour masquer les coupes de la goulotte et du couvercle et assurer ainsi la "continuité" du conduit.

Les bords libres des ailes 20a, 20b et/ou de la bande 18 sont amincis et effilés pour mieux recouvrir les extrémités adjacentes et perpendiculaires du conduit en donnant une impression visuelle de continuité. Les faces internes des ailes 20a, 20b du dispositif sont pourvues de nervures de fixation 36 permettant le "clipsage" du dispositif sur chaque extrémité de conduit tout en recouvrant les extrémités correspondantes des couvercles (coupés plus court).

En considérant plus particulièrement la figure 5, on voit que chaque échancrure s'étend entre deux tronçons 13, 14 faisant entre eux un angle voisin de 90° et que les bords de cette échancrure convergent vers le coude définissant la charnière 16. L'élément d'obturation 19 comporte deux bords 38 faisant entre eux un angle correspondant à celui que forment les bords de l'échancrure et auquel ils sont fixés. Ledit élément d'obturation comporte en outre deux autres bords 39 approximativement respectivement situés dans les prolongements des bords libres 40 de ladite aile latérale 20a, 20b, de part et d'autre du coude définissant la charnière 16.

Dans le cas d'un angle intérieur comme représenté sur les figures 1 à 5, la pièce d'obturation comporte une zone en débord 42 par rapport à l'angle formé par les prolongements des bords libres de l'aile latérale correspondante. Cette zone en débord est représentée hachurée sur la figure 5. Si les deux parois approximativement perpendiculaires sur lesquelles sont fixées les goulottes font en fait un angle légèrement inférieur à 90°, l'emboîtement à force du dispositif de recouvrement provoquera un élargissement de l'échancrure donc un étirement de l'élément de recouvrement et cet étirement aura pour conséquence d'absorber la zone en débord 42 tout en maintenant le contact avec les parois. Dans le cas contraire, la zone en débord se courbera le long des parois.

La figure 6 représente un autre dispositif de recouvrement dit "angle extérieur" utilisable avec les mêmes conduits. Ce dispositif comporte les mêmes éléments principaux qui portent les mêmes références numériques que sur les figures 1 à 5. La bande 18 forme cette fois un coude extérieur, la différence essentielle résidant essentiellement dans la forme de chaque élément d'obturation 19a adapté cette fois à la configuration d'un angle saillant des parois.

Cependant, comme dans le mode de réalisation précédent, chaque élément d'obturation comporte deux bords 38 faisant entre eux un angle correspondant à celui que forment les bords de l'échancrure et deux autres bords 39 approximativement respectivement situés dans les prolongements des bords libres de l'aile latérale 20a, 20b, de part et d'autre du coude. Chaque élément d'obturation 19a comporte aussi une petite zone en débord 42a par rapport à l'angle formé par lesdits bords libres de l'aile latérale qui assure les mêmes fonctions que dans l'exemple précédent.

Parmi les variantes possibles, on peut envisager que les deux tronçons 13 et 14 ne constituent pas une unique pièce moulée telle que celle qui est représentée figure 2 mais deux pièces distinctes fixées de part et d'autre d'une pièce moulée en matériau déformable souple telle que celle qui est représentée sur la figure 3, c'est-à-dire incluant deux éléments d'obturation et un lien 22. Les deux tronçons 13 et 14 pourraient par exemple être soudés de part et d'autre d'une telle pièce moulée en matériau déformable souple par mise en oeuvre d'un processus d'injection bi-matière. Dans ce cas, le lien 22 ferait partie intégrante de la charnière.

Dans le mode de réalisation des figures 7 et 8, on retrouve une pièce moulée 50 en matériau semi-rigide comprenant une bande coudée 52 et au moins une aile latérale 54 perpendiculaire à la bande coudée et comprenant une échancrure 56 ménagée au voisinage du coude. Cette pièce est représentée sur la figure 8. La différence essentielle réside dans la structure de l'élément d'obturation 60 qui est lui-même moulé en matériau relativement rigide et comporte une double glissière 62 pour laquelle ledit élément d'obturation est engagé avec jeu dans l'échancrure. L'élément d'obturation 60 est rapporté sur l'échancrure sans être lié à la pièce 50.

Comme cela est visible sur la figure 7, le jeu est suffisant pour ne pas empêcher l'ajustement angulaire entre les deux tronçons. L'élément d'obturation recouvre l'échancrure quel que soit l'angle donné au dispositif de recouvrement au moment de sa fixation entre les deux parties de conduit qu'il recouvre.

Le même concept est applicable pour la réalisation d'un dispositif de raccordement dit "angle plat", la charnière étant définie au coude mais sur une aile latérale du profilé.

## Revendications

1. Dispositif de recouvrement variable pour conduit de câblage électrique, comprenant deux tronçons (13, 14) en matériau semi-rigide rattachés l'un à l'autre suivant un agencement formant charnière (16), dans lequel au moins une échancrure (15a, 15b) d'ouverture ajustable est ménagée entre lesdits tronçons au voisinage de ladite charnière **caractérisé en ce que** cette échancrure est comblée ou recouverte par un élément d'obturation rapporté (19, 60) agencé pour permettre un ajustement angulaire entre les deux tronçons, au moyen de ladite charnière.

2. Dispositif selon la revendication 1, **caractérisé en ce que** ledit élément d'obturation (19) est en matériau déformable et fixé latéralement aux bords de ladite échancrure.

3. Dispositif selon l'une des revendications précédentes, **caractérisé en ce qu'**il comporte deux ailes latérales précitées parallèles, comprenant chacune une échancrure (15a, 15b) au voisinage de ladite charnière, chaque échancrure étant comblée ou recouverte par un élément d'obturation (19, 60) précité.

4. Dispositif selon la revendication 3, **caractérisé en ce que** les deux éléments d'obturation sont rattachés entre eux par un lien (22) s'étendant le long de ladite charnière.

5. Dispositif selon la revendication 4, **caractérisé en ce que** les deux éléments d'obturation (19) et ledit lien (22) forment une seule pièce moulée en matériau déformable souple.

6. Dispositif selon l'une des revendications précédentes, **caractérisé en ce qu'**il comporte une bande (18) présentant un coude et au moins une aile latérale (20a, 20b) s'étendant sensiblement perpendiculairement à ladite bande, ladite échancrure (15a, 15b) se situant sur ladite aile latérale au voisinage du coude et en sorte que ledit coude soit flexible et constitue ladite charnière (16).

7. Dispositif selon la revendication 6, **caractérisé en ce que** ladite échancrure s'étend entre deux tronçons (13, 14) faisant entre eux un angle voisin de 90°, **en ce que** ses bords convergent vers ladite charnière et **en ce que** ledit élément d'obturation comporte deux bords (38) faisant entre eux un angle correspondant à celui que forment les bords de ladite échancrure et auxquels ils sont fixés et deux autres bords (39) approximativement respectivement situés dans les prolongements des bords libres (40) de ladite aile latérale, de part et d'autre dudit coude.

8. Dispositif selon la revendication 4, **caractérisé en ce que** ladite pièce d'obturation comporte une zone en débord (42) par rapport à l'angle formé par lesdits bords libres de ladite aile latérale.

9. Dispositif selon l'une des revendications 2 à 8, **caractérisé en ce que** la face extérieure de chaque élément d'obturation (19) se situe dans le même plan que la face extérieure de l'aile latérale à laquelle elle est rattachée.

10. Dispositif selon l'une des revendications précédentes, **caractérisé en ce que** les bords de la ou chaque échancrure comportent des nervures (26) amincies et **en ce que** l'élément d'obturation correspondant comporte des fentes latérales (28) dans lesquelles s'engagent lesdites nervures.

11. Dispositif selon l'une des revendications précédentes, **caractérisé en ce que** le ou chaque élément d'obturation est solidarisé aux deux tronçons par collage.

12. Dispositif selon l'une des revendications 1 à 10, **caractérisé en ce que** le ou chaque élément d'obturation est solidarisé aux deux tronçons au moulage, par injection bi-matière.

13. Dispositif selon la revendication 5, **caractérisé en ce que** les deux tronçons en matériau semi-rigide précités sont fixés de part et d'autre de ladite pièce moulée en matériau déformable souple.

14. Dispositif selon la revendication 1, **caractérisé en ce que** ledit élément d'obturation (60) est en matériau relativement rigide et forme une double glissière où s'engagent avec jeu les bords de ladite échancrure (56).

## Claims

1. A variable covering device for electrical wiring conduit comprising two portions (13, 14) of semi-rigid material which are attached to each other with an arrangement forming a hinge (16) in which at least one cut-out (15a, 15b) which is adjustable in its opening is provided between said portions in the vicinity of said hinge, **characterised in that** said cut-out is filled or covered by an added closure element (19, 60) arranged to permit angular adjustment between the two portions by means of said hinge.

2. A device according to claim 1 **characterised in that** said closure element (19) is of deformable material and is fixed laterally to the edges of said cut-out.

3. A device according to one of the preceding claims **characterised in that** it comprises two said parallel lateral limbs each comprising a cut-out (15a, 15b) in the vicinity of said hinge, each cut-out being filled or covered by a said closure element (19,60).

4. A device according to claim 3 **characterised in that** the two closure elements are attached to each other by a tie (22) extending along said hinge.

5. A device according to claim 4 **characterised in that** the two closure elements (19) and said tie (22) form a single piece which is moulded of flexible deformable material.

6. A device according to one of the preceding claims **characterised in that** it comprises a band (18) having a bend and at least one lateral limb (20a, 20b) extending substantially perpendicularly to said band, said cut-out (15a, 15b) being disposed on said lateral limb in the vicinity of the bend and in such a way that said bend is flexible and constitutes said hinge (16).

7. A device according to claim 6 **characterised in that** said cut-out extends between two portions (13, 14) forming an angle close to 90° between them, that its edges converge towards said hinge and that said closure element comprises two edges (38) forming between them an angle corresponding to that which the edges of said cut-out form and to which they are fixed and two other edges (39) approximately respectively disposed in line with the free edges (40) of said lateral limb on respective sides of said bend.

8. A device according to claim 4 **characterised in that** said closure piece comprises a rim zone (42) with respect to the angle formed by said free edges of said lateral limb.

9. A device according to one of claims 2 to 8 **characterised in that** the external face of each closure element (19) is in the same plane as the external face of the lateral limb to which it is attached.

10. A device according to one of the preceding claims **characterised in that** the edges of the or each cut-out comprise ribs (26) of reduced thickness and that the corresponding closure element comprises lateral slots (28) into which said ribs engage.

11. A device according to one of the preceding claims **characterised in that** the or each closure element is fixed with respect to the two portions by glueing.

12. A device according to one of claims 1 to 10 **characterised in that** the or each closure element is fixed with respect to the two portions upon moulding by double-material injection.

13. A device according to claim 5 **characterised in that** said two portions of semi-rigid material are fixed on respective sides of said piece moulded from flexible deformable material.

14. A device according to claim 1 **characterised in that** said closure element (60) is of relatively rigid material and forms a double slide in which the edges of said cut-out (56) engage with play.

## Patentansprüche

1. Veränderliche Abdeckvorrichtung für einen elektrischen Kabelkanal, umfassend zwei Abschnitte (13, 14) aus einem halbstarren Werkstoff, die gemäß einer ein Scharnier (16) bildenden Ausbildung miteinander verbunden sind, bei der zwischen den Abschnitten in Nähe des Scharniers mindestens ein Ausschnitt (15a, 15b) mit einstellbarer Öffnung vorgesehen ist, **dadurch gekennzeichnet, daß** der Ausschnitt durch ein angebrachtes Verschlußelement (19, 60) ausgefüllt oder bedeckt ist, das ausgebildet ist, um mit Hilfe des Scharniers eine Winkeleinstellung zwischen den beiden Abschnitten zu gestatten.

2. Vorrichtung nach Anspruch 1, **dadurch gekennzeichnet, daß** das Verschlußelement (19) aus einem verformbaren Werkstoff besteht und seitlich an den Rändern des Ausschnitts befestigt ist.

3. Vorrichtung nach einem der vorhergehenden Ansprüche, **dadurch gekennzeichnet, daß** sie zwei parallele Seitenschenkel aufweist, die jeweils in Nähe des Scharniers einen Ausschnitt (15a, 15b) aufweisen, wobei jeder Ausschnitt durch ein Verschlußelement (19, 60) ausgefüllt oder bedeckt ist.

4. Vorrichtung nach Anspruch 3, **dadurch gekennzeichnet, daß** die beiden Verschlußelemente durch ein Verbindungsglied (22) miteinander verbunden sind, das sich längs des Scharniers erstreckt.

5. Vorrichtung nach Anspruch 4, **dadurch gekennzeichnet, daß** die beiden Verschlußelemente (19) und das Verbindungsglied (22) ein einziges aus einem verformbaren biegsamen Werkstoff gegossenes Stück bilden.

6. Vorrichtung nach einem der vorhergehenden Ansprüche, **dadurch gekennzeichnet, daß** sie ein mit einer Abwinklung versehenes Band (18) und mindestens einen Seitenschenkel (20a, 20b) aufweist, der sich im wesentlichen senkrecht zu dem Band erstreckt, wobei der Ausschnitt (15a, 15b) auf dem Seitenschenkel in Nähe der Abwinklung so angeordnet ist, daß die Abwinklung flexibel ist und das Scharnier (16) bildet.

7. Vorrichtung nach Anspruch 6, **dadurch gekennzeichnet, daß** der Ausschnitt sich zwischen zwei Abschnitten (13, 14) erstreckt, die miteinander einen Winkel von nahe 90° bilden, daß seine Ränder auf das Scharnier zu konvergieren und daß das Verschlußelement zwei Ränder (38) aufweist, die miteinander einen Winkel bilden, der dem Winkel entspricht, den die Ränder des Ausschnitts miteinander bilden, an denen sie befestigt sind, sowie zwei weitere Ränder (39), die jeweils zu beiden Seiten der Abwinklung annähernd in der Verlängerung der freien Ränder (40) des Seitenschenkels liegen.

8. Vorrichtung nach Anspruch 4, **dadurch gekennzeichnet, daß** das Verschlußelement einen bezüglich des von den freien Rändern des Seitenschenkels gebildeten Winkels vorstehenden Bereich (42) aufweist.

9. Vorrichtung nach einem der Ansprüche 2 bis 8, **dadurch gekennzeichnet, daß** die Außenseite jedes Verschlußelements (19) in derselben Ebene wie die Außenseite des Seitenschenkels, an dem es befestigt ist, liegt.

10. Vorrichtung nach einem der vorhergehenden Ansprüche, **dadurch gekennzeichnet, daß** die Ränder des oder jedes Ausschnitts verdünnte Rippen (26) aufweisen und daß das entsprechende Verschlußelement seitliche Schlitze (28) aufweist, in die diese Rippen eintreten.

11. Vorrichtung nach einem der vorhergehenden Ansprüche, **dadurch gekennzeichnet, daß** das oder jedes Verschlußelement mit den beiden Abschnitten durch Verklebung fest verbunden ist.

12. Vorrichtung nach einem der Ansprüche 1 bis 10, **dadurch gekennzeichnet, daß** das oder jedes Verschlußelement mit den beiden Abschnitten bei der Formung durch Bimaterial-Injektion fest verbunden wird.

13. Vorrichtung nach Anspruch 5, **dadurch gekennzeichnet, daß** die beiden Abschnitte aus einem halbstarren Werkstoff zu beiden Seiten des gegossenen Teils aus einem biegsamen verformbaren Werkstoff befestigt sind.

14. Vorrichtung nach Anspruch 1, **dadurch gekennzeichnet, daß** das Verschlußelement (60) aus einem relativ starren Werkstoff besteht und eine doppelte Gleitführung bildet, in die die Ränder des Ausschnitts (56) mit einem Spiel eintreten.
